# EUROPEAN PATENT APPLICATION

(11) **EP 4 183 583 A1**
(43) Date of publication of application: **24.05.2023**
(21) Application number: 21842206.1
(22) Date of filing: 13.07.2021
(51) Int. Cl.: B32B 27/36, B65D 65/40

(54) **LAMINATE SHEET AND PACKAGING BODY**

(30) Priority: 15.07.2020 JP 2020121437
(71) Applicant: TOPPAN INC., Tokyo 110-0016 (JP)
(72) Inventor: AOKI Kazumi, Tokyo 110-0016 (JP)
(74) Representative: TBK
(86) International application number: PCT/JP2021/026357
(87) International publication number: WO 2022/014610

(57) **Abstract**

A laminated sheet includes a substrate having sheet shape and a sealant layer provided on the substrate. The sealant layer includes a first resin layer containing a crystalline polyester, and a second resin layer located between the first resin layer and the substrate and containing no polyester, the second resin layer is joined to the substrate and the first resin layer, and a crystallization temperature of the crystalline polyester is 120°C or higher and 150°C or lower.

## Description

### [Technical Field]

The present invention relates to a laminated sheet and a packaging body.

### [Background Art]

As an example of a container that is sealed after being filled with contents such as liquid or pre-packaged food, a packaging bag is disclosed in PTL 1 specified below. This packaging bag is formed of a laminate including a substrate layer and an intermediate layer, which are a polyester film on which an inorganic oxide membrane is deposited, and a sealant layer, which is a polyolefin film.

### [Citation List]

### [Patent Literature]

PTL 1: JP 2017-178357 A

### [Summary of the Invention]

### [Technical Problem]

The food and drink contained in a container may include an aromatic component. An example of an aromatic component is a fatty acid ester-based aromatic component. Polyolefins (especially polyethylene) tend to adsorb fatty acid ester-based aromatic components. For this reason, for example, when the contents of the packaging bag disclosed in PTL 1 include one or more types of fatty acid ester-based aromatic components, the one or more fatty acid ester-based aromatic components in the contents are mostly or completely adsorbed on the polyolefin film of the packaging bag. As a result, the aroma of the packaged contents may deteriorate significantly.

In order to suppress such a problem, for example, a crystalline polyester film may be used as the sealant layer. However, crystalline polyester films tend to have poor sealing properties. Therefore, when a crystalline polyester film is simply used as the sealant layer, the sealant layer may tend to cause problems such as poor sealing. That is, when a crystalline polyester film is simply used as the sealant layer, the quality of the sealant layer tends to vary.

An object of an aspect of the present disclosure is to provide a laminated sheet capable of favorably suppressing the adsorption of fatty acid ester-based aromatic components and having a sealant layer of stable quality, as well as a packaging body including the laminated sheet.

### [Solution to Problem]

A laminated sheet according to an aspect of the present disclosure includes a substrate having sheet shape and a sealant layer provided on the substrate. The sealant layer includes a first resin layer containing a crystalline polyester, and a second resin layer located between the first resin layer and the substrate and containing no polyester, the second resin layer is joined to the substrate and the first resin layer, and a crystallization temperature of the crystalline polyester is 120°C or higher and 150°C or lower.

A glass transition temperature of the crystalline polyester may be 70°C or higher and 80°C or lower.

A melting temperature of the crystalline polyester may be 210°C or higher and 240°C or lower.

The first resin layer may include a first layer containing the crystalline polyester and a second layer located between the second resin layer and the first layer, and the second layer may contain a polyester having a crystallinity lower than a crystallinity of the crystalline polyester. The polyester contained in the second layer may be an amorphous polyester.

The first resin layer may further include a third layer located between the first layer and the second layer, and the third layer may contain a polyester having a crystallinity lower than a crystallinity of the crystalline polyester. The crystallinity of the polyester contained in the third layer may be higher than the crystallinity of the polyester contained in the second layer.

The substrate may include a support layer made of paper, and a barrier layer located between the support layer and the sealant layer.

A packaging body according to another aspect of the present disclosure includes the above-described laminated sheet. An innermost layer of the packaging body is formed of the first resin layer of the sealant layer, and a first part of the first resin layer and a second part of the first resin layer are attached together.

A thickness of the first resin layer may be 20 µm or more and 40 µm or less, and an average adhesive strength between the first part and the second part may be 20 N/15 mm or higher.

### [Advantageous Effects of the Invention]

According to an aspect of the present disclosure, it is possible to provide a laminated sheet capable of favorably suppressing the adsorption of fatty acid ester-based aromatic components and having a sealant layer of stable quality, as well as a packaging body including the laminated sheet.

### [Brief Description of the Drawings]

Fig. 1 is an enlarged cross-sectional view of the major part of a laminated sheet according to an embodiment.
Fig. 2 is a schematic plan view of a packaging body.
Fig. 3 is a cross-sectional view taken along line III-III in Fig. 2.
Fig. 4 is an enlarged cross-sectional view of the major part of a laminated sheet according to a first modified example.
Fig. 5(a) is a schematic cross-sectional view of a first resin layer of a laminated sheet according to a second modified example, and Fig. 5(b) is a schematic cross-sectional view of a first resin layer of a laminated sheet according to a third modified example.
Fig. 6 is a diagram showing the relationship between the heat sealing temperature and average adhesive strength.

### [Description of the Embodiments]

A preferred embodiment of an aspect of the present disclosure will be described in detail below with reference to the attached drawings. In the following description, the same elements or elements having the same functions will be denoted by the same reference numerals, and redundant description will be omitted.

### <Laminated Sheet>

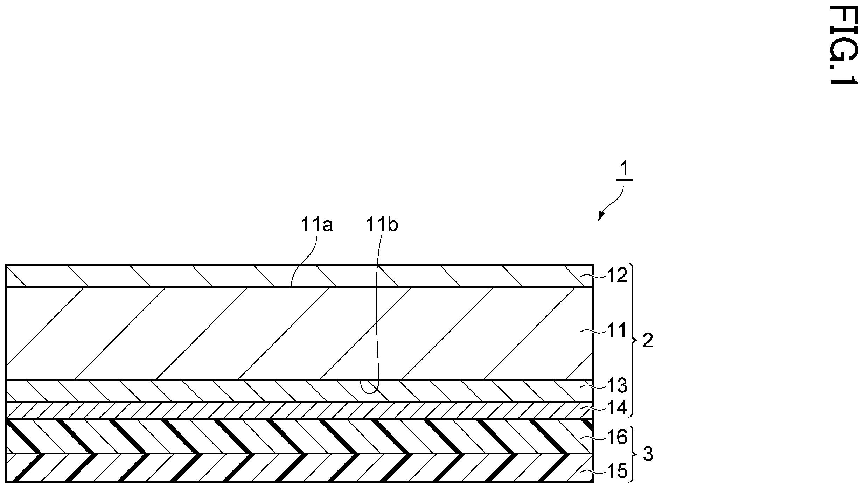

A laminated sheet according to the present embodiment will be described with reference to Fig. 1. Fig. 1 is an enlarged cross-sectional view of the major part of the laminated sheet. A laminated sheet 1 shown in Fig. 1 is a flexible member for packaging objects such as food and drink, pharmaceuticals, cosmetics, chemicals, electronic devices, tools, and stationery. The laminated sheet 1 is a laminate of a plurality of layer members and/or film members. The laminated sheet 1 may be used as a packaging body for packaging a solid, liquid, or the like. When the laminated sheet 1 is used as a packaging body, the packaging body may only include the laminated sheet 1, or may include the laminated sheet 1 and an adhesive or the like. The laminated sheet 1 may also be referred to as a laminated film. The terms "layer", "membrane", "film", "sheet", and "foil" as herein may have the same or substantially the same meaning.

The laminated sheet 1 may have the required properties (such as adsorptivity, gas barrier properties, light shielding properties, water resistance, temperature and humidity resistance, mechanical strength, ease of printing, and ease of decoration). The adsorptivity refers to the ability to adsorb, for example, a substance generated from an object wrapped in the laminated sheet 1, a substance in the air, or the like. The gas barrier properties refer to the ability to prevent or reduce permeation of gases such as oxygen and water vapor. The water resistance is evaluated based on the rate of decrease in strength when the packaging body gets wet. The printability is evaluated based on the number of pinholes, insect damages, or the like in the printed part of the laminated sheet 1. For example, the higher the printability, the smaller the number of pinholes or the like in the printed part, and thus the better the color development in that part. The laminated sheet 1 includes a substrate 2 having sheet shape and a sealant layer 3 provided on the substrate 2.

The substrate 2 is a base sheet of the laminated sheet 1 and includes a support layer 11 made of paper, a first coat layer 12, a second coat layer 13, and a barrier layer 14.

The support layer 11 is a layer member made of paper that has been filtered out and supports the first coat layer 12, second coat layer 13, barrier layer 14, and sealant layer 3. The support layer 11 has main surfaces 11a and 11b. The main surfaces 11a and 11b are surfaces that intersect the thickness direction of the support layer 11. When the laminated sheet 1 is used to form a packaging body, the main surface 11a is the surface located on the outer surface side of the packaging body, and the main surface 11b is the other surface located on the inner surface side of the packaging body. Examples of the paper forming the support layer 11 include high-quality paper, special high-quality paper, coated paper, art paper, cast-coated paper, Japanese paper, imitation paper, kraft paper, and the like. In this embodiment, the support layer 11 is made of bleached kraft paper, but is not limited to this. For example, the support layer 11 may be unbleached kraft paper. Considering the appearance of the outer surface of the packaging body, the support layer 11 may be made of Unryu Japanese paper or mixed paper. The support layer 11 may have a monolayer structure, or may have a laminate structure.

The basis weight of the support layer 11 is, for example, 200 g/m² or more and 500 g/m² or less, and the support layer 11 is flexible. The lower limit of the basis weight of the support layer 11 may be, for example, 200 g/m², 250 g/m², 280 g/m², 300 g/m², 320 g/m², or 360 g/m². This is suitable for the lamination process of a part of the laminated sheet 1 with another part. The upper limit of the basis weight of the support layer 11 may be, for example, 450 g/m², 400 g/m², 360 g/m², 320 g/m², or 300 g/m². This is suitable for the heating of the boundary between different parts of the laminated sheet 1.

The first coat layer 12 is a layer for improving properties such as the water resistance of the support layer 11, and coats the main surface 11a of the support layer 11 entirely. In the laminated sheet 1, the first coat layer 12 and the sealant layer 3 are located on opposite sides via the support layer 11. When the laminated sheet 1 is used to form a packaging body, the first coat layer 12 is located on the outer side of the support layer 11. The thickness of the first coat layer 12 is, for example, 20 µm or more and 40 µm or less. When the thickness of the first coat layer 12 is 20 µm or more, the space formed by the bumps and dents on the support layer 11 can be filled. As a result., the outer surface of the first coat layer 12 can be smoothened. Since the thickness of the first coat layer 12 is 40 µm or less, the first coat layer 12 is less likely to crack. The lower limit of the thickness of the first coat layer 12 may be, for example, 25 µm or 30 µm. The upper limit of the thickness of the first coat layer 12 may be, for example, 35 µm or 30 µm.

The first coat layer 12 is, for example, a polyolefin film. A polyolefin film is a film formed using polyolefin such as polyethylene or polypropylene as the main material. In the present embodiment, the main material of the first coat layer 12 is polyethylene. A low density polyethylene resin (LDPE), a medium density polyethylene resin (MDPE), a straight-chain low density polyethylene resin (LLDPE), or the like may be used to form the first coat layer 12. Although the first coat layer 12 is a stretched film considering the water resistance, dimensional stability, and the like, it is not limited to this. The first coat layer 12 may be a non-stretched film. The method of stretching the first coat layer 12 is not particularly limited. The first coat layer 12 may contain additives or the like. Ink or the like may be applied to the first coat layer 12.

The second coat layer 13 is a layer for improving properties such as the water resistance of the support layer 11, and coats the main surface 11b of the support layer 11 entirely. In the laminated sheet 1, the second coat layer 13 is located between the support layer 11 and the sealant layer 3. When the laminated sheet 1 is used to form a packaging body, the second coat layer 13 is located on the inner side of the support layer 11. Similarly to the thickness of the first coat layer 12, the thickness of the second coat layer 13 is, for example, 15 µm or more and 40 µm or less. In the present embodiment, as with the first coat layer 12, the main material of the second coat layer 13 is polyethylene.

The barrier layer 14 is a layer that exhibits, for example, gas barrier properties, and is located over the second coat layer 13. The barrier layer 14 coats the part of the second coat layer 13 that is not covered by the support layer 11. In the laminated sheet 1, the barrier layer 14 is located between the support layer 11 and the sealant layer 3. The barrier layer 14 is formed of, for example, one or more resin films. The resin film(s) may be made of, for example, a polyethylene, polypropylene, or polyethylene terephthalate (PET). For example, aluminum, alumina, silica, or the like is deposited on the resin film. This improves gas barrier properties of the barrier layer 14. Alternatively, the resin film may be formed of, for example, polyvinylidene chloride (PVDC), ethylene-vinyl alcohol copolymer (EVOH), polyacrylonitrile (PAN), polyvinyl alcohol (PVA), or the like. In this case, the barrier layer 14 can exhibit gas barrier properties or the like even when silica or the like is not deposited thereon. The barrier layer 14 may include a resin film made of polyethylene or the like and a resin film made of PVDC or the like. The thickness of the barrier layer 14 is, for example, 9 µm or more and 25 µm or less.

The sealant layer 3 is a layer for allowing the laminated sheet 1 to be heat-sealed, and is located on the barrier layer 14. The sealant layer 3 coats the part of the barrier layer 14 that is not covered by the second coat layer 13. When the laminated sheet 1 is used to form a packaging body, the sealant layer 3 is the innermost layer of the packaging body. Therefore, in the packaging body, the sealant layer 3 is the member of the laminated sheet 1 that comes into contact with the packaged object. The thickness of the sealant layer 3 is, for example, 40 µm or more and 100 µm or less. When the thickness of the sealant layer 3 is 40 µm or more, the sealant layer 3 can exhibit good heat sealing properties. The sealant layer 3 has a first resin layer 15 and a second resin layer 16 located between the first resin layer 15 and the substrate 2.

The first resin layer 15 serves as an exposed layer of the sealant layer 3, and exhibits sealing properties by heat sealing. The first resin layer 15 contains crystalline polyester and exhibits low adsorption properties to, for example, fatty acid ester-based aromatic components. The first resin layer 15 may be made of a crystalline polyester film. The first resin layer 15 may either be a stretched film or a non-stretched film. The first resin layer 15 is formed using, for example, an extrusion molding method such as T-die extrusion or inflation.

The first resin layer 15 has a thickness of 20 µm or more and 80 µm or less, for example. When the thickness of the first resin layer 15 is 20 µm or more, the first resin layer 15 can exhibit good heat sealing properties. The lower limit of the thickness of the first resin layer 15 may be, for example, 30 µm or 40 µm. In addition, since the thickness of the first resin layer 15 is 80 µm or less, the first resin layer 15 can favorably exhibit low adsorption properties to fatty acid ester-based aromatic components, or the like. The upper limit of the thickness of the first resin layer 15 may be, for example, 60 µm, 50 µm, or 40 µm.

When part of the first resin layer 15 is heat-sealed with another part thereof at a heat sealing temperature of 190°C and a pressure of 0.2 MPa for 1 second, the average adhesive strength between them is, for example, 13 N/15 mm or higher. In this case, the two parts are fused well. When the average adhesive strength is 13 N/15 mm or higher, for example, the pressure resistance and impact resistance of a packaging body formed of the laminated sheet 1 can be easily ensured. In this regard, the average adhesive strength may be 15 N/15 mm or higher, 20 N/15 mm or higher, 25 N/15 mm or higher, or 30 N/15 mm or higher. The average adhesive strength is measured according to JIS K 7127:1999.

The crystallization temperature of the crystalline polyester contained in the first resin layer 15 is, for example, 120°C or higher and 150°C or lower. In this case, the first resin layer 15 can favorably exhibit low adsorption properties to fatty acid ester-based aromatic components. In particular, the first resin layer 15 can favorably exhibit low adsorption properties to ethyl caprate, which is a kind of a fatty acid ester-based aromatic component. The glass transition temperature of the crystalline polyester is 70°C or higher and 80°C or lower, and the melting temperature of the crystalline polyester is 210°C or higher and 240°C or lower. The crystallization temperature, glass transition temperature, and melting temperature of the crystalline polyester are each measured with differential scanning calorimetry (DSC) under the conditions of, for example, a measurement temperature of 20 to 300°C and a temperature increase rate of 5°C/min.

The crystalline polyester can be prepared by, for example, condensation polymerization between diols and dicarboxylic acids. Examples of polyesters that can be used include polybutylene terephthalate, polybutylene naphthalate, and polyethylene terephthalate. An example of the diol is, for example, aliphatic diol. Specific examples of aliphatic diols include compounds such as ethylene glycol, hexamethylene glycol, neopentyl glycol, and 1,4-butanediol. The crystalline polyester may be prepared by using one of the above-described compounds alone as the diol, or using a combination of two or more compounds. An example of the dicarboxylic acid is, for example, aromatic dicarboxylic acid. Specific examples of aromatic dicarboxylic acids include compounds such as isophthalic acids, terephthalic acids, and anhydrides and lower alkyl esters of these acids. The crystalline polyester may be prepared by using one of the above-described compounds alone as the dicarboxylic acid, or using a combination of two or more compounds.

The crystallinity of the crystalline polyester is, for example, 10% or higher. The crystallinity of the crystalline polyester contained in the first resin layer 15 can be obtained, for example, with X-ray diffraction. In this case, first, CuKα rays are used as the X-ray source, and the X-ray diffraction spectrum of a sample film of crystalline polyester is measured. The mass fraction crystallinity is calculated from the diffraction intensity and total scattering intensity of the crystalline part included in the measurement results of the X-ray diffraction spectrum.

The first resin layer 15 may include, in addition to crystalline polyester, various types of additives such as a flame retardant, slip agent, anti-blocking agent, antioxidant, light stabilizer, and tackifier.

The second resin layer 16 is a layer that joins the substrate 2 and the first resin layer 15, and is covered by the substrate 2 and the first resin layer 15. The second resin layer 16 may be used to assist the film formation of the first resin layer 15, or may be used to firmly integrate the substrate 2 and the first resin layer 15. The second resin layer 16 is a non-stretched film. The second resin layer 16 is formed using, for example, an extrusion molding method such as T-die extrusion or inflation. When the second resin layer 16 is used to assist the film formation of the first resin layer 15, for example, the second resin layer 16 is formed simultaneously with the first resin layer 15 by a co-extrusion molding method. This makes it possible to suitably form the first resin layer 15, for example, even when the first resin layer 15 has a low film formability. In this embodiment, the first resin layer 15 and the second resin layer 16 are simultaneously formed by a co-extrusion molding method.

The second resin layer 16 is a layer that does not contain polyester, unlike the first resin layer 15. In other words, the second resin layer 16 is a layer containing a resin different from that of the first resin layer 15 (a different resin layer). In order to improve the film formability of the second resin layer 16, the resin (polymer compound) contained in the second resin layer 16 is, for example, polyolefin, an ethylene-acrylic acid copolymer, an ethylene-methacrylic acid ester copolymer, an ethylene-methacrylic acid ester-acid anhydride copolymer, or an ethylene-methacrylic acid-methacrylic acid ester copolymer. For a better adhesion, the polyolefin may be an acid anhydride-modified polyolefin. The density of the polyethylene is, for example, 0.86 g/cm³ or higher and 0.90 g/cm³ or lower. Examples of ethylene-acrylic acid ester copolymers include ethylene-methyl acrylate copolymers (EMA) and ethylene-ethyl acrylate copolymers (EEA). Examples of ethylene-methacrylic acid ester copolymers include ethylene-methyl methacrylate copolymers (EMMA). The second resin layer 16 contains at least one of the polymer compounds described above.

The second resin layer 16 may include, in addition to the above-described polymer compound(s), various types of additives such as a flame retardant, slip agent, anti-blocking agent, antioxidant, light stabilizer, and tackifier.

### <Package>

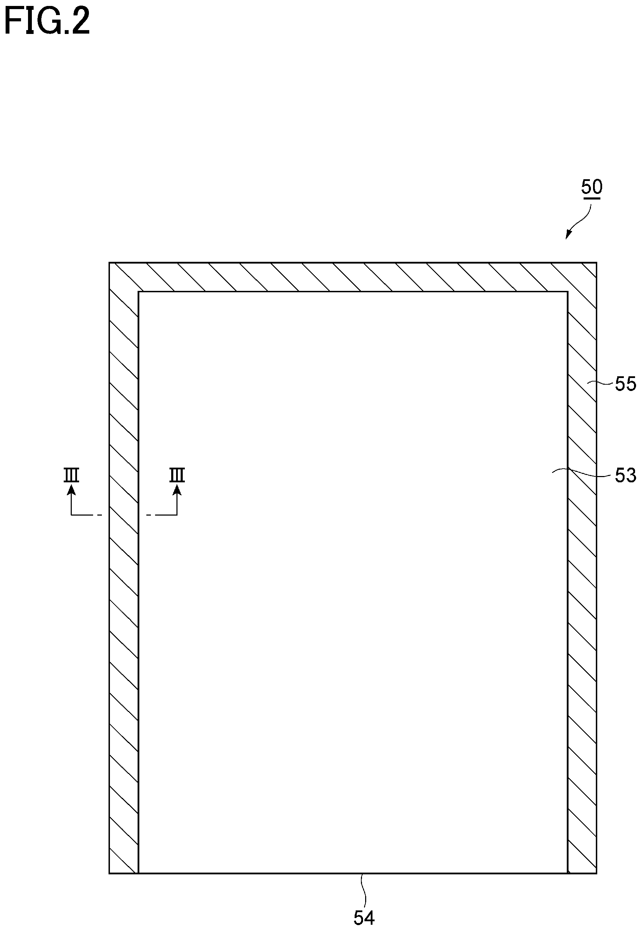

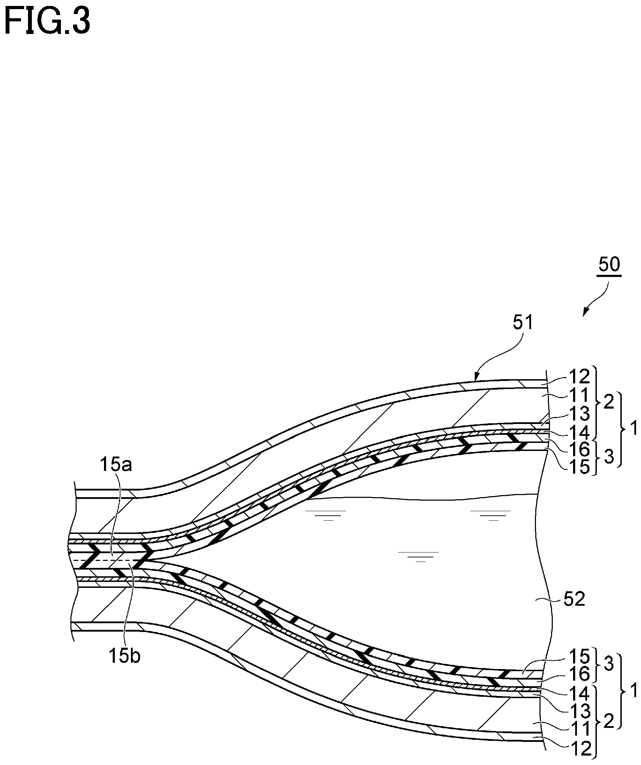

Next, an example of a package including a packaging body formed by using the laminated sheet 1 according to the present embodiment will be described with reference to Figs. 2 and 3. Fig. 2 is a schematic plan view of the package. Fig. 3 is a cross-sectional view taken along line III-III in Fig. 2.

A package 50 shown in Figs. 2 and 3 is a product that contains contents 52 such as a solid, liquid, or the like. The package 50 includes a packaging body 51 formed of the laminated sheet 1, and contents 52 contained in the packaging body 51. In this embodiment, the packaging body 51 is a paper container packaging body. Paper container packaging bodies are packaging bodies labeled with the identification of paper container packaging bodies under the Law for Promotion of Effective Utilization of Resources in Japan. Therefore, the main component of the packaging body 51 according to this embodiment is paper. In the present embodiment, the mass of paper is 51% or higher of the total mass of the packaging body 51.

The packaging body 51 is formed of the laminated sheet 1 and contains the contents 52. The packaging body 51 is formed in a bag shape by, for example, folding the laminated sheet 1 in half so as to surround the contents 52, and then sealing the edges of the laminated sheet 1. The contents 52 are not particularly limited, and may be, for example, food and drink, pharmaceuticals, cosmetics, chemicals, and the like. The contents 52 is not limited to a solid, and may be liquid or gas. The contents 52 may include pieces that are individually packaged. In the present embodiment, the contents 52 are a liquid containing fatty acid ester-based aromatic components, for example, an alcoholic beverage. Examples of fatty acid ester-based aromatic components include isoamyl acetate, ethyl caproate, ethyl caprylate, ethyl caprate, ethyl laurate, phenylethyl acetate, and ethyl lactate. The carbon number of the fatty acid in the fatty acid ester-based aromatic component is, for example, 6 or more and 20 or less. For example, ginjo sake, which is a type of Japanese alcoholic beverage, has an aroma based on a fatty acid ester-based aromatic component.

The packaging body 51 has a body part 53 in which the contents 52 are contained, a fold part 54 formed by folding the laminated sheet 1 in half, and a seal part 55 extending along edges of the body part 53. The shape of the body part 53 is not particularly limited. In this example, it has a rectangular shape when viewed from a certain direction. At least part of the outer surface of the body part 53 is printed (not shown). The body part 53 may contain, for example, a specific gas such as nitrogen in addition to the contents 52. The innermost layer of the packaging body 51 is formed of the sealant layer 3 (more specifically, the first resin layer 15). Therefore, the contents 52 contained in the packaging body 51 come into contact with the first resin layer 15 of the body part 53. In this embodiment, when viewed from a certain direction, the fold part 54 forms one side of the body part 53, and the seal part 55 forms the remaining three sides of the body part 53. Both ends of the fold part 54 and the seal part 55 overlap each other.

The seal part 55 is a part where part of the sealant layer 3 of the laminated sheet 1 and another part thereof are attached together. More specifically, first and second parts 15a and 15b of the first resin layer 15 are attached to each other. The first and second parts 15a and 15b are parts constituting the seal part 55. The first part 15a is included in one of the parts of the seal part 55 folded in half, and the second part 15b is included in the other part of the seal part 55 folded in half. The seal part 55 is formed by, for example, heating and pressing (that is, heat-sealing) part of the laminated sheet 1 and another part thereof. An example of the average adhesive strength between the first and second parts 15a and 15b is 15 N/15 mm or higher, but it is not limited to this. In order for the packaging body 51 to have good sealing properties, when the thickness of the first resin layer 15 is 20 µm or more and 40 µm or less, the average adhesive strength between the first and second parts 15a and 15b may be 20 N/15 mm or higher, 25 N/15 mm or higher, or 30 N/15 mm or higher.

The functions and effects provided by the laminated sheet 1 according to the present embodiment described above and the packaging body 51 including the laminated sheet 1 will be described in comparison with a conventional example.

Conventionally, an amorphous polyester film is sometimes used as the inner surface of a packaging body in order to preserve the aroma of the contents. However, amorphous polyester is known to have a relatively low heat sealing properties. For this reason, it is not common to use an amorphous polyester film as the heat seal layer. For example, a resin (for example, polyolefin) exhibiting good heat sealing properties may be provided on the surface of an amorphous polyester film. In this case, aroma preservation properties of the amorphous polyester is impaired. In addition, there has been the problem that the aroma of the contents cannot be sufficiently preserved even when amorphous polyester is used. Therefore, when amorphous polyester is used to form, for example, a laminated sheet having a support layer made of paper, it is difficult to achieve both heat sealing properties and aroma-retaining properties.

The sealant layer 3 of the laminated sheet 1 has the first resin layer 15 containing crystalline polyester. This first resin layer 15 serves as an exposed layer of the sealant layer 3. The tendency of crystalline polyester to adsorb fatty acid ester-based aromatic components is lower than those of polyolefin and amorphous polyester. In particular, it has been found that crystalline polyesters with a crystallization temperature of 120°C or higher and 150°C or lower (for example, ethyl caprate) are less likely to adsorb fatty acid ester-based aromatic components. Therefore, for example, by packaging food or the like having a fatty acid ester-based aromatic component with the laminated sheet 1 so that the sealant layer 3 comes into contact with the contents, the fatty acid ester-based aromatic component is less likely to be adsorbed by the laminated sheet 1.

When a polyester melts, the viscosity of the polyester tends to decrease. Therefore, when the sealant layer is formed of a single crystalline polyester layer, there tends to be variation in the quality of the sealant layer. For example, when a crystalline polyester layer is formed with the T-die method, the crystalline polyester layer tends to shrink significantly and have a reduced width (that is, neck-in tends to occur). Further, since the viscosity of polyester varies greatly, it is difficult to form a crystalline polyester layer having stable quality with inflation. In contrast, in the present embodiment, the sealant layer 3 has, in addition to the first resin layer 15, a second resin layer 16 that does not contain polyester between the first resin layer 15 and the substrate 2. This laminate structure of the sealant layer 3 facilitates the film formation of the first resin layer 15 containing crystalline polyester. In particular, in this embodiment, the first and second resin layers 15 and 16 are formed by a co-extrusion molding method. This allows the second resin layer 16 to favorably exhibit its function to assist the film formation of the first resin layer 15. Therefore, according to the present embodiment, it is possible to provide a laminated sheet 1 capable of favorably suppressing the adsorption of fatty acid ester-based aromatic components and having a sealant layer 3 of stable quality. In addition, by using the sealant layer 3 including the first and second resin layers 15 and 16, even when a support layer 11 made of paper is used, a laminated sheet 1 having good heat sealing properties and aroma preservation properties can be obtained.

The innermost layer of the packaging body 51 formed using the laminated sheet 1 is formed of the first resin layer 15 of the sealant layer 3. As a result, when the contents of the packaging body 51 contain a fatty acid ester-based aromatic component, the fatty acid ester-based aromatic component is less likely to be adsorbed by the packaging body 51. Therefore, by using the laminated sheet 1 according to the present embodiment, the packaging body 51 that can well preserve the aroma of the contents 52 can be produced.

In this embodiment, the glass transition temperature of the crystalline polyester may be 70°C or higher and 80°C or lower, and the melting temperature of the crystalline polyester may be 210°C or higher and 240°C or lower. In this case, the first resin layer 15 of the sealant layer 3 may contain a crystalline polyester that is less likely to adsorb ethyl caprate.

In this embodiment, the thickness of the first resin layer 15 may be 20 µm or more and 40 µm or less, and the average adhesive strength between the first and second parts 15a and 15b may be 20 N/15 mm or higher. In this case, the shape of the packaging body 51 can be well maintained.

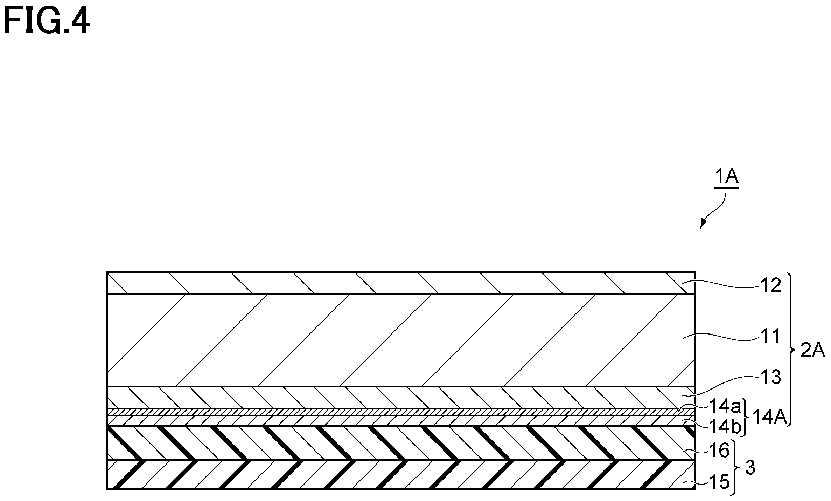

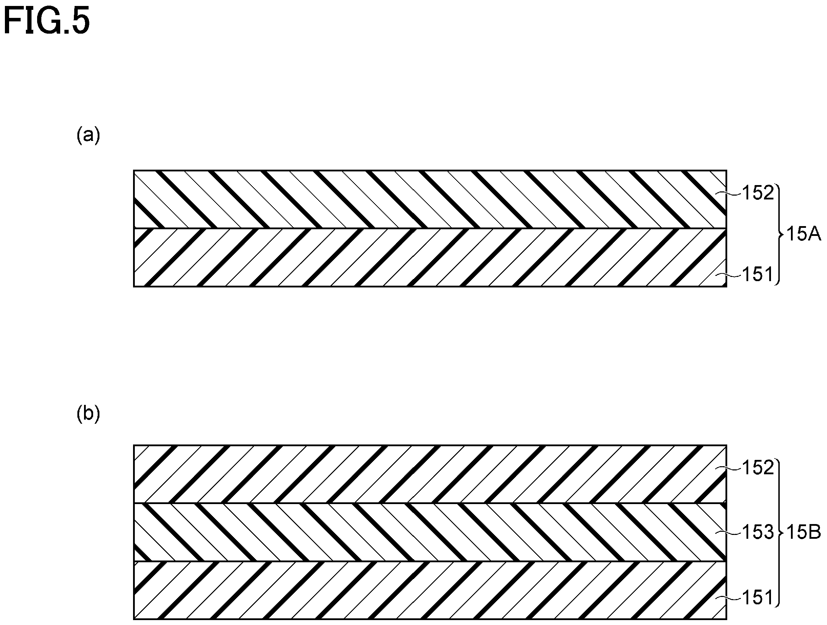

In the following, modified examples of the above-described embodiment will be described with reference to Figs. 4 and 5. In the following modified examples, the description on parts that have already been described with regard to the above-described embodiment will be omitted. Therefore, the differences from the above-described embodiment will be mainly discussed below.

Fig. 4 is an enlarged cross-sectional view of the major part of the laminated sheet according to a first modified example. As shown in Fig. 4, a laminated sheet 1A according to the first modified example differs from the laminated sheet 1 of the above-described embodiment in that the former includes a substrate 2A. The substrate 2A includes the support layer 11, first coat layer 12, second coat layer 13, and a barrier layer 14A. The barrier layer 14A has a first film 14a and a second film 14b laminated on each other.

The first film 14a is a film that exhibits gas barrier properties against water vapor, oxygen, and the like, and is formed on the second coat layer 13. The first film 14a is, for example, a metal foil such as an aluminum foil or an alloy foil such as a stainless steel foil. In the first modified example, the first film 14a is an aluminum foil. The first film 14a has a thickness of 5 µm or more and 13 µm or less, for example. In this case, the first film 14a can exhibit good gas barrier properties and light shielding properties. The second film 14b is made of the same material as the barrier layer 14 of the above embodiment. The second film 14b may not have silica or the like deposited thereon.

The laminated sheet 1A according to the first modified example described above also provides the same functions and effects as the above embodiment. In addition, since the laminated sheet 1A has the barrier layer 14A, good gas barrier properties and light shielding properties are exhibited.

Fig. 5(a) is a schematic cross-sectional view of the first resin layer of a laminated sheet according to a second modified example. A first resin layer 15A shown in Fig. 5(a) includes a first layer 151 and a second layer 152 laminated on each other.

The first layer 151 serves as an exposed layer of the sealant layer 3 and contains crystalline polyester. In the second modified example, the first layer 151 has the same configuration as the first resin layer 15 of the above embodiment. Therefore, the crystallization temperature of the crystalline polyester contained in the first layer 151 is 120°C or higher and 150°C or lower. The glass transition temperature of the crystalline polyester may be 70°C or higher and 80°C or lower, and the melting temperature of the crystalline polyester may be 210°C or higher and 240°C or lower. The first layer 151 is formed using, for example, an extrusion molding method such as T-die extrusion or inflation.

The second layer 152 is a layer for assisting the film formation of the first layer 151, and is located between the second layer 16 and the first resin layer 151 in the sealant layer 3. The second layer 152 contains polyester. Examples of polyesters contained in the second layer 152 include polybutylene terephthalate, polybutylene naphthalate, and polyethylene terephthalate. The polyester in the second layer 152 may be crystalline polyester or amorphous polyester. When the polyester in the second layer 152 is crystalline polyester, the crystallinity of the polyester is lower than the crystallinity of the crystalline polyester contained in the first layer 151. In this case, the crystallinity of the crystalline polyester of the second layer 152 is 1% or more lower than the crystallinity of the crystalline polyester of the first layer 151. The crystallinity of the polyester can be adjusted by, for example, changing the kind of monomer used in copolymerization. Alternatively, the crystallinity can be adjusted by changing the film formation conditions of the layer containing the polyester. Examples of film formation conditions include the cooling rate, heating temperature, and draw ratio. Amorphous polyesters are polyesters that have no or substantially no crystalline structure. Crystalline polyesters and amorphous polyesters can be distinguished based on whether the crystallization temperature can be determined with DSC.

The thickness of the first resin layer 15A is approximately the same as that of the first resin layer 15 of the above embodiment. Therefore, the total thickness of the first layer 151 and the second layer 152 is, for example, 30 µm or higher and 80 µm or less. The thickness of the first layer 151 may be more or less than that of the second layer 152. Considering the fatty acid ester-based aromatic component adsorptivity of the first resin layer 15A, the thickness of the first layer 151 may be more than that of the second layer 152. Considering the film formation of the first resin layer 15A, the thickness of the first layer 151 may be smaller than that of the second layer 152.

The second layer 152 is a non-stretched film. The second layer 152 is formed using, for example, an extrusion molding method such as T-die extrusion or inflation. To facilitate the film formation of the first resin layer 15A, the first layer 151 and the second layer 152 may be formed simultaneously. In this case, for example, the first layer 151 and the second layer 152 are simultaneously formed by a co-extrusion molding method. In this embodiment, the first and second resin layers 15A and 16 may be simultaneously formed by a co-extrusion molding method. That is, the first layer 151, the second layer 152, and the second resin layer 16 may be simultaneously formed by a co-extrusion molding method. This favorably facilitates the film formation of the sealant layer according to the second modified example.

The laminated sheet according to the second modified example described above also provides the same functions and effects as the above embodiment. In addition, in the second modified example, the film formation of the first resin layer 15A can be facilitated, and the first resin layer 15A is less likely to adsorb fatty acid ester-based aromatic components.

Fig. 5(b) is a schematic cross-sectional view of the first resin layer of a laminated sheet according to a third modified example. A first resin layer 15B shown in Fig. 5(b) includes first, second, and third layers 151, 152, and 153 laminated on each other. The third layer 153 is located between the first layer 151 and the second layer 152. In the third modified example, the first layer 151 and the second layer 152 have the same configurations as the first layer 151 and the second layer 152 of the second modified example, respectively.

The third layer 153 is a layer for assisting the film formation of the first layer 151 similarly to the second layer 152. The third layer 153 contains polyester. Examples of polyesters contained in the third layer 153 include polybutylene terephthalate, polybutylene naphthalate, and polyethylene terephthalate. The polyester in the third layer 153 may be crystalline polyester or amorphous polyester. When the polyester in the third layer 153 is crystalline polyester, the crystallinity of the polyester is lower than the crystallinity of the crystalline polyester contained in the first layer 151. In this case, the crystallinity of the crystalline polyester of the third layer 153 is 1% or more lower than the crystallinity of the crystalline polyester of the first layer 151. Further, the crystallinity of the crystalline polyester of the third layer 153 is higher than the crystallinity of the crystalline polyester of the second layer 152, although it is not limited to this.

The thickness of the first resin layer 15B is approximately the same as that of the first resin layer 15 of the above embodiment. Therefore, the total thickness of the first layer 151, the second layer 152, and the third layer 153 is, for example, 30 µm or more and 80 µm or less. Considering the fatty acid ester-based aromatic component adsorptivity of the first resin layer 15B, the thickness of the first layer 151 may be more than those of the second layer 153 and the third layer 153. Considering the film formation of the first resin layer 15B, the thickness of the first layer 151 may be smaller than those of the second layer 152 and the third layer 153.

The third layer 153 is a non-stretched film. The third layer 153 is formed using, for example, an extrusion molding method such as T-die extrusion or inflation. To facilitate the film formation of the first resin layer 15B, the first, second, and third layers 151, 152, and 153 may be formed simultaneously. In this case, for example, the first, second, and third layers 151, 152, and 153 are simultaneously formed by a co-extrusion molding method. In this embodiment, the first and second resin layers 15B and 16 may be simultaneously formed by a co-extrusion molding method. That is, the first layer 151, the second layer 152, the third layer 153, and the second resin layer 16 may be simultaneously formed by a co-extrusion molding method. This favorably facilitates the film formation of the sealant layer according to the third modified example.

The laminated sheet according to the third modified example described above also provides the same functions and effects as the above embodiment. In addition, the third modified example facilitates the film formation of the first resin layer 15A.

A laminated sheet according to an aspect of the present disclosure and a packaging body using the laminated sheet 1 are not limited to the above embodiment and the above modified examples. The above embodiment and the above modified examples may be combined as appropriate. For example, the first and second modified examples may be combined, or the first and third modified examples may be combined.

In the above embodiment and modified examples, the substrate of the laminated sheet includes the support layer, the first coat layer, the second coat layer, the barrier layer, and the seal layer, but the present invention is not limited to this. The substrate may have constituent requirements other than these layers. For example, a reinforcing layer for improving the physical strength may be formed between the support layer and the barrier layer. The reinforcing layer may either be a non-stretched film or a stretched film, for example. In this case, the reinforcing layer contains a thermoplastic resin such as polyamide, polypropylene, or polyester.

In the above embodiment and modified examples, a bag-shaped packaging body is formed by folding the laminated sheet in half, but the present invention is not limited to this. For example, the laminated sheet may be folded more than once. In this case, the packaging body may be, for example, a box-shaped container or a gable-top container. Alternatively, the packaging body may be produced without folding the laminated sheet. In this case, the packaging body may be produced by, for example, sealing the edges of two sheets superposed on each other. The packaging body may be formed with a part that can be opened and closed. For example, a detachable cap or the like may be attached to the packaging body.

In the above embodiment and modified examples, the substrate includes a support layer made of paper. However, the present invention is not limited to this. The support layer may be, for example, a resin film such as a PET film. In this case, the laminated sheet may not include at least one of the first coat layer, second coat layer, and barrier layer.

### [Examples]

The present disclosure will be described in more detail with reference to the following examples; however, the present disclosure is not limited to these examples.

### (Example 1)

### <Laminated Sheet>

First, an EMA and a polyester A (manufactured by Unitika Ltd., intrinsic viscosity: 0.73) were prepared. In addition, a stretched substrate PET film (thickness: 12 µm) on which silica was deposited to form a barrier layer was prepared. Subsequently, using an extrusion molding apparatus, and a two-component polyurethane adhesive (anchor/under coating agent) at 260°C or higher and 300°C or lower, an EMA film and a polyester A film were formed on the substrate by melt co-extrusion. In other words, molten EMA and polyester A were co-extruded into a film shape with an extrusion molding machine. As a result, an EMA film (second resin layer, thickness: 20 µm) disposed directly on the barrier layer, and a polyester film (first resin layer, thickness: 40 µm) disposed on the second resin layer were simultaneously formed.

After that, a pack-based paper (manufactured by Oji F-Tex Co., Ltd.) having a rectangular shape and a basis weight of 320 g/m² was prepared as a support layer made of paper. Further, a polyethylene film (density: 0.906 g/cm³) was attached to both sides of the support layer. As a result, a polyethylene film (first coat layer) with a thickness of 18 µm was formed on one of the main surfaces of the support layer, and a polyethylene film (second coat layer) with a thickness of 30 µm was formed on the other main surface of the support layer. The second coat layer was attached to the barrier layer. A laminated sheet including a substrate and a sealant layer including first and second resin layers was thus formed.

The glass transition temperature, crystallization temperature, and melting temperature of the polyester A are shown in Table 1 below. The glass transition temperature, crystallization temperature, and melting temperature of the polyester A were measured using the first resin layer peeled off from the laminated sheet as a measurement sample with a differential scanning calorimeter ("DSC7020", manufactured by Hitachi, Ltd.) and at a measurement temperature of 20 to 300°C and a heating rate of 5°C/min.

### <Package>

First, part of the sealant layer of the laminated sheet was heat-sealed with another part thereof. The heat welding was performed under the conditions of 200°C, 0.2 MPa, and 1 sec using an impulse sealer ("OPL-300-10", manufactured by FUJI IMPULSE CO., LTD.). At this time, at least part of the edges was left unwelded. Consequently, a bag having an opening was formed. 50 mL of sake, Daiginjo sake ("Daiginjo", manufactured by HAKUTSURU SAKE BREWING CO., LTD.) was accommodated in the bag. Then, the unwelded parts of the edge were welded. A package having a packaging body containing Daiginjo sake was thus formed. The dimensions and sealing region of the laminated sheet were set so that the area of the packaging body that comes into contact with the liquid would be 200 cm².

### (Example 2)

A laminated sheet and a package using the laminated sheet were formed in the same manner as in Example 1, except that a polyester B (manufactured by Unitika Ltd., intrinsic viscosity: 0.57) was used instead of the polyester A. The glass transition temperature, crystallization temperature, and melting temperature of the polyester B are shown in Table 1 below.

### (Example 3)

A laminated sheet and a package using the laminated sheet were formed in the same manner as in Example 1, except that a polyester C (manufactured by Unitika Ltd., intrinsic viscosity: 0.69) was used instead of the polyester A. The glass transition temperature, crystallization temperature, and melting temperature of the polyester C are shown in Table 1 below.

### (Comparative Example 1)

A laminated sheet and a package using the laminated sheet were formed in the same manner as in Example 1, except that a polyester D (manufactured by Unitika Ltd., intrinsic viscosity: 0.66) was used instead of the polyester A. The glass transition temperature, crystallization temperature, and melting temperature of the polyester D are shown in Table 1 below.

### (Comparative Example 2)

A laminated sheet and a package using the laminated sheet were formed in the same manner as in Example 1, except that an amorphous polyester E (manufactured by TAMAPOLY CO., LTD., intrinsic viscosity: 0.72) was used instead of the polyester A. The glass transition temperature of the polyester E is shown in Table 1 below.

### (Comparative Example 3)

A laminated sheet and a package using the laminated sheet were formed in the same manner as in Example 1, except that a polyethylene (density: 0.916 g/cm³) was used instead of the polyester A. The glass transition temperature and melting temperature of the polyethylene are shown in Table 1 below. The glass transition temperature of the polyethylene is the value described in the known literature.

**[Table 1]**

| | Glass transition temperature (°C) | Crystallization temperature (°C) | Melting temperature (°C) |
|---|---|---|---|
| Ex. 1 | 79 | 135 | 239 |
| Ex. 2 | 75 | 132 | 230 |
| Ex. 3 | 72 | 149 | 230 |
| Comp. Ex. 1 | 54 | 114 | 180 |
| Comp. Ex. 2 | 72 | - | - |
| Comp. Ex. 3 | -125 | - | 120 |

### <Method of Evaluating Adsorptivity>

The aromatic component adsorptivity of each of the packaging bodies of Examples 1 to 3 and Comparative Examples 1 to 3 was tested and evaluated as follows. Note that about ±2% measurement error could occur in the test described below.

First, each of the packaging bodies of Examples 1 to 3 and Comparative Examples 1 to 3 was allowed to stand at normal pressure and 23°C. In addition, as a reference example, a glass bottle (capacity: 720 mL) containing 300 mL of Daiginjo sake was allowed to stand at normal pressure and 23°C. After that, the solid-phase microextraction method (SPME method) was performed on each of Examples 1 to 3, Comparative Examples 1 to 3, and the reference example to collect the aromatic components contained in the Daiginjo sake after a predetermined period of time. Specifically, first, 2 g of Daiginj o sake to be tested was collected from each of the packaging bodies and glass bottle after standing for the predetermined period of time. Each sample was then placed in a 20 mL vial and sealed. The vials were heated at 60°C for 5 minutes. Then, after inserting an SPME fiber (manufactured by Sigma-Aldrich, outer diameter: 65 µm, PDMS/DVB) into each vial, the vials and SPME fibers were heated at 60°C for 5 minutes. This allows the SPME fibers to collect the aromatic components generated from the samples. PDMS is polydimethylsiloxane and DVB is divinylbenzene.

The SPME fibers that had collected the aromatic components were inserted into the inlet of GC/MS (manufactured by Agilent Technologies, "7890B/5977B"). The types and amounts of the collected aromatic components were measured. The measurement results of the examples and comparative examples are shown in Tables 2 and 3 below. Tables 2 and 3 show the measured amounts of aromatic components in Examples 1 to 3 and Comparative Examples 1 to 3 after a predetermined period of time in percentage, assuming that the measured amounts of aromatic components in the reference example are 100%. Table 2 shows the measurement results for ethyl caprylate, which is one of the aromatic components. Table 3 shows the measurement results for ethyl caprate, which is one of the aromatic components.

The adsorptivity test results for the aromatic component (ethyl caprylate) in the Examples and Comparative Examples were evaluated according to the criteria A to D shown below. When the evaluation result is A, it can be said that the packaging body exhibits low aromatic component adsorption properties. The evaluation results of the Examples and Comparative Examples are shown in Table 2 below.
A: Ethyl caprylate measurement result after 8 weeks is 88.0% or higher
B: Ethyl caprylate measurement result after 8 weeks is 85.0% or higher
C: Ethyl caprylate measurement result after 8 weeks is 70.0% or higher
D: Ethyl caprylate measurement result after 8 weeks is 50.0% or lower

The adsorptivity test results for the aromatic component (ethyl caprate) in the Examples and Comparative Examples were evaluated according to the criteria A to C shown below. When the evaluation result is A, it can be said that the packaging body exhibits low aromatic component adsorption properties. The evaluation results of the Examples and Comparative Examples are shown in Table 3 below.
A: Ethyl caprate measurement result after 8 weeks is 70.0% or higher
B: Ethyl caprate measurement result after 8 weeks is 30.0% or higher
C: Ethyl caprate measurement result after 8 weeks is 10.0% or lower

As shown in Tables 2 and 3 below, Examples 1 to 3 were rated A for both ethyl caprylate and ethyl caprate. On the other hand, Comparative Examples 1 to 3 were rated B to D for both ethyl caprylate and ethyl caprate. These results show that a sealant layer formed using a crystalline polyester whose crystallization temperature has been controlled to 120°C or higher and 150°C or lower favorably exhibits low aromatic component adsorption properties (especially for fatty acid ester-based fragrance components).

**[Table 2]**

| | Ethyl caprylate | | | Rating |
|---|---|---|---|---|
| | 2 weeks | 4 weeks | 8 weeks | |
| Ex. 1 | 91.7% | 86.1% | 88.2% | A |
| Ex. 2 | 91.5% | 91.4% | 88.5% | A |
| Ex. 3 | 97.5% | 94.2% | 95.9% | A |
| Comp. Ex. 1 | 88.8% | 87.6% | 85.3% | B |
| Comp. Ex. 2 | 86.4% | 78.7% | 74.4% | C |
| Comp. Ex. 3 | 14.6% | 15.4% | 13.8% | D |

**[Table 3]**

| | Ethyl caprate | | | Rating |
|---|---|---|---|---|
| | 2 weeks | 4 weeks | 8 weeks | |
| Ex. 1 | 82.9% | 76.4% | 74.9% | A |
| Ex. 2 | 83.2% | 78.4% | 71.6% | A |
| Ex. 3 | 84.3% | 75.4% | 78.0% | A |
| Comp. Ex. 1 | 46.4% | 44.5% | 37.7% | B |
| Comp. Ex. 2 | 62.6% | 52.6% | 38.5% | B |
| Comp. Ex. 3 | 0.0% | 0.0% | 0.0% | C |

### <Heat Sealing Test>

The heat sealing properties of the polyesters A to E and polyethylene shown in Table 1 above were tested and evaluated as follows.

First, a stretched substrate PET film with a thickness of 12 µm was prepared. Subsequently, using an extrusion molding apparatus, and a two-component polyurethane adhesive at 260°C or higher and 300°C or lower, an EMA film and a polyester A film (see Table 1) were formed on the substrate by melt co-extrusion. In other words, molten EMA and polyester A were co-extruded into a film shape with an extrusion molding machine. As a result, an EMA film (thickness: 20 µm) disposed directly on the stretched substrate PET film and a polyester film (thickness: 20 µm) disposed on the EMA film were simultaneously formed. A sample A1 in which the stretched substrate PET film and a sealant layer including the EMA film and polyester film are integrated together with a two-component polyurethane adhesive was thus formed. The sealant layer of the sample A1 contains the polyester A.

In addition, samples B 1 to E1 having sealant layers using the polyesters B to E (see Table 1) instead of the polyester A, respectively, were formed. Furthermore, a sample F1 was formed by integrating the stretched base PET film and a sealant layer formed only from polyethylene and having a thickness of 60 µm.

Each of the samples A1 to F1 was formed with a contact part where a part of the sealant layer comes into contact with another part thereof. The contact part was heat-sealed at 0.2 MPa for 1 second using a linear seal bar with a width of 10 mm. An adhesive part between the two parts of the sealant layer was thus formed. The heat sealing temperature was varied between 90°C and 210°C. The average adhesive strength of the adhesive parts was measured based on the "Heat sealing strength test" described in JIS Z 1707:2019. The measurement of adhesive strength was conducted using the TENSILON universal material testing instrument ("RTC-1310A", manufactured by ORIENTEC CO., LTD.) with a tensile rate of 300 mm/min.

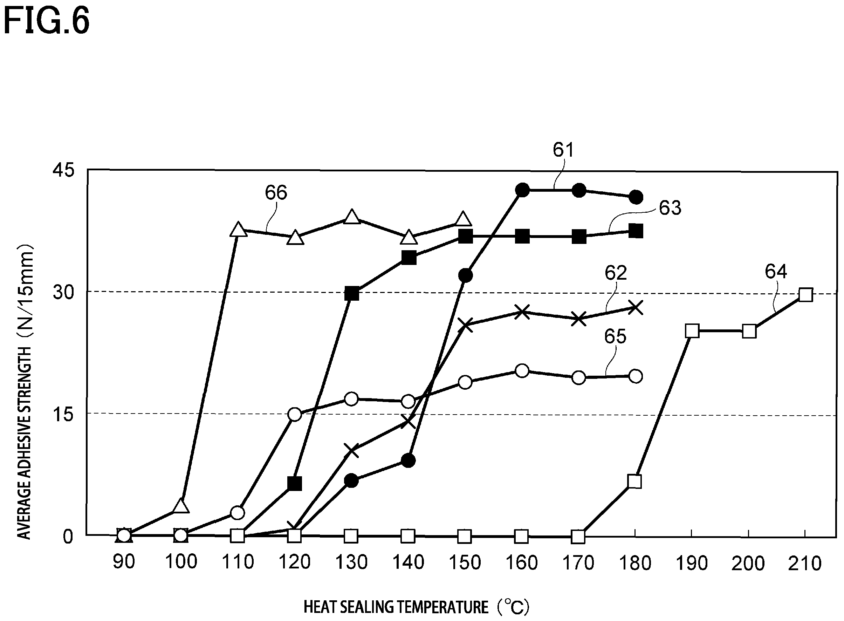

Fig. 6 is a diagram showing the relationship between the heat sealing temperature and average adhesive strength. In Fig. 6, the horizontal axis represents the heat sealing temperature, and the vertical axis represents the average adhesive strength. In Fig. 6, lines 61 to 66 indicate the measurements results of the samples A1 to F1, respectively. As shown in Fig. 6, the adhesive part of the sample D1 containing the polyester D had an average adhesive strength of 20 N/15 mm or higher when the heat sealing temperature was 190°C or higher. On the other hand, the adhesive parts of the samples A1 to C1 containing the polyesters A to C had an average adhesive strength of 20 N/15 mm or higher when the heat sealing temperature was 150°C or higher. In particular, the average adhesive strength of the adhesive part of the sample C1 sharply increases when the heat sealing temperature is 120°C or higher. These results show that a sealant layer containing a crystalline polyester whose crystallization temperature is 120°C or higher and 150°C or lower (or whose glass transition temperature is 70°C or higher and 80°C or lower) can be heat-sealed at a relatively low temperature.

The adhesive part of the sample E1 containing an amorphous polyester had an average adhesive strength lower than 20 N/15 mm even when the heat sealing temperature was 150°C or higher. In contrast, the adhesive parts of the samples A1 to C1 containing crystalline polyesters had an average adhesive strength of 20 N/15 mm or higher when the heat sealing temperature was 150°C or higher. These results show that a sealant layer containing crystalline polyester is superior to a sealant layer containing amorphous polyester in terms of heat sealing properties.

### [Reference Signs List]

- 1, 1A: Laminated sheet
- 2, 2A: Substrate
- 3: Sealant layer
- 11: Support layer
- 11a: Main surface
- 11b: Main surface
- 12: First coat layer
- 13: Second coat layer
- 14, 14A: Barrier layer
- 14a: First film
- 14b: Second film
- 15, 15A, 15B: First resin layer
- 15a: First part
- 15b: Second part
- 16: Second resin layer
- 50: Package
- 51: Package
- 52: Contents
- 53: Body part
- 54: Fold part
- 55: Seal part
- 151: First layer
- 152: Second layer
- 153: Third layer

## Claims

1. A laminated sheet comprising:
a substrate having sheet shape; and
a sealant layer provided on the substrate, wherein
the sealant layer includes a first resin layer containing a crystalline polyester, and a second resin layer located between the first resin layer and the substrate and containing no polyester,
the second resin layer is joined to the substrate and the first resin layer, and
a crystallization temperature of the crystalline polyester is 120°C or higher and 150°C or lower.

2. The laminated sheet according to claim 1, wherein a glass transition temperature of the crystalline polyester is 70°C or higher and 80°C or lower.

3. The laminated sheet according to claim 1 or 2, wherein a melting temperature of the crystalline polyester is 210°C or higher and 240°C or lower.

4. The laminated sheet according to any one of claims 1 to 3, wherein
the first resin layer includes a first layer containing the crystalline polyester and a second layer located between the second resin layer and the first layer, and
the second layer contains a polyester having a crystallinity lower than a crystallinity of the crystalline polyester.

5. The laminated sheet according to claim 4, wherein the polyester in the second layer is an amorphous polyester.

6. The laminated sheet according to claim 4 or 5, wherein
the first resin layer further includes a third layer located between the first layer and the second layer, and
the third layer contains a polyester having a crystallinity lower than a crystallinity of the crystalline polyester.

7. The laminated sheet according to claim 6, wherein the crystallinity of the polyester contained in the third layer is higher than that of the polyester contained in the second layer.

8. The laminated sheet according to any one of claims 1 to 7, wherein the substrate includes a support layer and a barrier layer located between the support layer and the sealant layer, the support layer being made of paper.

9. A packaging body comprising:
the laminated sheet according to any one of claims 1 to 8, wherein
an innermost layer of the packaging body is formed of the first resin layer of the sealant layer, and
a first part of the first resin layer and a second part of the first resin layer are bonded together.

10. The packaging body according to claim 9, wherein
a thickness of the first resin layer is 20 µm or more and 40 µm or less, and
an average adhesive strength between the first part and the second part is 20 N/15 mm or higher.
